# EUROPÄISCHE PATENTANMELDUNG

(11) **EP 1 797 986 A1**
(43) Veröffentlichungstag der Anmeldung: **20.06.2007**
(21) Anmeldenummer: 05027709.4
(22) Anmeldetag: 19.12.2005
(51) Int. Cl.: B23K 9/26, B23Q 11/00

(54) **Fräsvorrichtung, insbesondere zum Fräsen von Elektrodenkappen und Punktschweisselektroden aus Kupferwerkstoffen**

(71) Anmelder: INPRO Innovationsgesellschaft für fortgeschrittene Produktionssysteme in der Fahrzeugindustrie mbH, 10587 Berlin (DE)
(72) Erfinder: Niedergesäss, Ulf, 10587 Berlin (DE)
(74) Vertreter: Hoffmann, Klaus-Dieter

(57) **Zusammenfassung**

Die Erfindung betrifft eine Fräsvorrichtung, insbesondere zum Fräsen von Elektrodenkappen und Punkschweißelektroden aus Kupferwerkstoffen, mit einem Ständer (1) an dem der Grundkörper (2) eines Kappenfräsers (3) verstellbar befestigt ist, der einen mit mindestens einer Schneidplatte (4) versehenen rotierbaren Fräskopf (5) aufweist, der von einem Elektromotor (6) über einen Getriebeantrieb (7) in Drehung versetzbar ist, und mit einer Druckluftversorgung (8) mit mindestens einer verstellbaren Düseneinrichtung (9) zum Ausblasen der beim Fräsvorgang an der Schneidplatte anfallenden Späne in ein mit einem Auffangbehälter (10) verbundenes Spanableitsystem (11). Zur Gewährleistung einer autonomen Druckluftversorgung der Fräsvorrichtung ist die Druckluftversorgung von einer Verdichterturbine (8) gebildet, die während des Fräsvorgangs mittels des Elektromotors des Kappenfräser in Betrieb gesetzt ist und die benötigte Druckluft an die mit ihr kommunizierende Düseneinrichtung zum Ausblasen der beim Fräsvorgang an der Schneidplatte anfallenden Späne in das mit dem Auffangbehälter verbundene Spanableitsystem autonom fördert.

## Beschreibung

Die Erfindung betrifft eine Fräsvorrichtung, insbesondere zum Fräsen von Elektrodenkappen und Punkschweißelektroden aus Kupferwerkstoffen, mit einem Ständer, an dem der Grundkörper eines Kappenfräsers verstellbar befestigt ist, der einen mit mindestens einer Schneidplatte versehenen rotierbaren Fräskopf aufweist, der von einem Elektromotor über einen Getriebeantrieb in Drehung versetzbar ist, und mit einer Druckluftversorgung mit mindestens einer verstellbaren Düseneinrichtung zum Ausblasen der beim Fräsvorgang an der Schneidplatte anfallenden Späne in ein mit einem Auffangbehälter verbundenes Spanableitsystem.

Beim Widerstandspunktschweißen werden in regelmäßigen Abstand die Elektrodenkappen nachgefräst. Hierzu findet z.B. eine Fräsvorrichtung der eingangs erwähnten Art, wie sie aus der Dokumentation "Betriebsanleitung Elektrodenkappenfräser abe 3600.037.00C"; Konzeptstand: 03.12.2004; der Schweißtechnik Bräuer GmbH bekannt ist Verwendung, wobei die beim Fräsvorgang an der Schneidplatte des rotierenden Fräskopfes des Kappenfräsers entstehenden Späne durch Druckluft, die von einer externen Druckluftversorgung eines bestehenden Druckluftnetzes zugeführt wird, in das Spanableitsystem ausgeblasen werden, das an einen Auffangbehälter anschließbar ist.

Der Erfindung liegt die Aufgabe zugrunde, eine Fräsvorrichtung der eingangs genannten Art zur Verfügung zu stellen, die eine autonome Druckluftversorgung während des Fräsvorgangs zum Ausblasen der am Fräskopf des Kappenfräsers anfallenden Späne in das Spanableitsystem gewährleistet und somit unabhängig von bestehenden Druckluftnetzen flexibel und ortsungebunden einsetzbar ist.

Diese Aufgabe wird erfindungsgemäß dadurch gelöst, daß die Druckluftversorgung von einer Verdichterturbine gebildet ist, die während des Fräsvorgangs mittels des Elektromotors des Kappenfräser in Betrieb gesetzt ist und die benötigte Druckluft an die mit ihr kommunizierende Düseneinrichtung zum Ausblasen der beim Fräsvorgang an der Schneidplatte anfallenden Späne in das mit dem Auffangbehälter verbundene Spanableitsystem autonom fördert.

Vorzugsweise ist die Rotationswelle der Turbinenräder der Verdichterturbine über ein Getriebe oder über einen Zahnriemen mit der Antriebswelle des Elektromotors antriebsmäßig verbunden.

Vorteilhafterweise kann auch eine Verlängerung der Antriebswelle des Elektromotors die Rotationswelle der Turbinenräder der Verdichterturbine bilden.

Die erfindungsgemäße Fräsvorrichtung gewährleistet eine autonome Druckluftversorgung, da der Elektromotor des Kappenfräsers zusätzlich zur Erzeugung der benötigten Druckluft genutzt wird und somit ein Anschluß der Fräsvorrichtung an eine externes Druckluftnetz sich erübrigt. Der Elektromotor des Kappenfräsers treibt über eine Verbindung mit Übersetzungsverhältnis, wie ein Getriebe oder einen Zahnriemen, oder aber unmittelbar mit seiner Antriebswelle die Verdichterturbine an. Diese saugt eingangsseitig Umgebungsluft auf einem großen Querschnitt an und verdichtet diese durch die Rotation der Turbinenräder. Ausgangsseitig der Verdichterturbine wird ein Druckluftstrom aus einem geringen Querschnitt mit hoher Geschwindigkeit abgegeben und von der mit der Verdichterturbine bevorzugt über eine flexible Druckluftleitung verbundene Düseneinrichtung direkt zu dem Fräskopf des Kappenfräser geleitet. Ein Druckluftspeicher zur Bevorratung von Druckluft für die Fräsvorrichtung ist nicht erforderlich.
Die erfindungsgemäße Fräsvorrichtung ist flexibel und ortsungebunden einsetzbar, was insbesondere an Bandstrassen der Kfz-Herstellung, im Schiffsbau und dgl. von Vorteil ist.

Ausführungsformen der erfindungsgemäßen Fräsvorrichtung werden nun anhand der Zeichnungen beschrieben. In diesen sind:
**Fig. 1** eine Seitenansicht einer schematisch dargestellten bevorzugten Ausfiihrungsform der Fräsvorrichtung teilweise im Längsschnitt,
**Fig. 2** eine der Fig. 1 entsprechende Seitenansicht, jedoch mit einer anderen Variante des Antriebs der Verdichterturbine durch den Elektromotor der Fräsvorrichtung und
**Fig. 3** eine den Fig. 1 und 2 entsprechende Seitenansicht, jedoch mit einer weiteren Variante des Antriebs der Verdichterturbine durch den Elektromotor der Fräsvorrichtung.

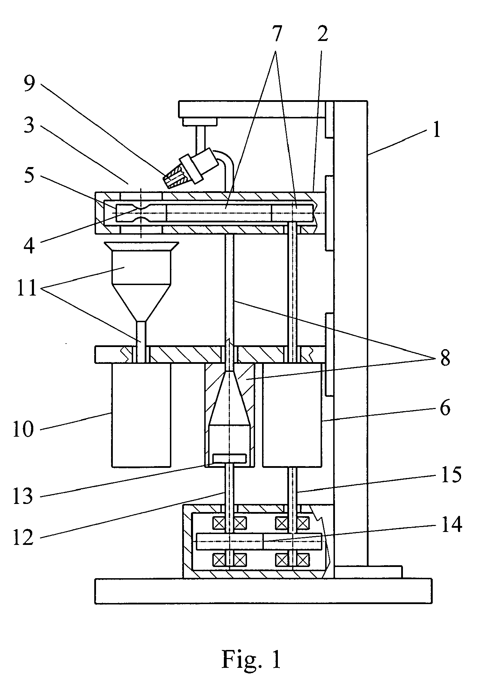

Wie die Figuren 1 bis 3 zeigen, weist die Fräsvorrichtung zum Fräsen von Elektrodenkappen und Punktschweißelektroden aus Kupferwerkstoffen einen Ständer 1 auf, der z.B. lösbar in geeigneter Weise mit dem Fußboden oder einer anderen geeigneten Unterlagen fest verbunden werden kann und an dem der Grundkörper 2 eines Kappenfräsers 3 verstellbar befestigt ist. Der Kappenfräser 3 umfaßt einen mit mindestens einer Schneidplatte 4 versehenen rotierbaren Fräskopf 5, der von einem Elektromotor 6 über einen mehrere Zahnräder aufweisenden Getriebeantrieb 7 in Drehung versetzbar ist. Bei Inbetriebnahme der Fräsvorrichtung wird die Schweißzange mit den zu nachzufräsenden Elektrodenkappen in der Rotationsachse des die Schneidplatte 4 aufweisenden Fräskopfes 5 des Kappenfräsers 3 angeordnet. Ist die Schweißzange ortsfest vorgesehen, so ist es herkömmlicherweise möglich, den Kappenfräser 3 durch eine nicht dargestellte Bewegungseinrichtung vor der feststehenden Elektrode zu positionieren.

Um die beim Fräsvorgang an der Schneidplatte 4 anfallenden Späne mittels Druckluft aus dem Fräskopf 5 des Kappenfräsers 3 in ein mit einem Auffangbehälter 10 verbundenes Spanableitsystem 11 auszublasen, ist als Druckluftversorgung eine Verdichterturbine 8 vorgesehen, die bei den in den Figuren 1 bis 3 dargestellten Ausführungsformen der Fräsvorrichtung an einem Träger des Ständers 1 gehaltert ist. Der Auffangbehälter 10 des Spanableitsystems 11 und der Elektromotor 6 des Kappenfräsers 3 der Fräsvorrichtung sind bei diesen Ausfiihrungsformen ebenfalls an diesem Träger gehaltert.

Ausgangsseitig ist die Verdichterturbine 8 über eine möglichst flexible Druckluftleitung mit einer Düseneinrichtung 9 verbunden, die verstellbar an einem weiteren Träger des Ständers 1 der Fräsvorrichtung gehaltert und mit der Düsenöffung auf die Schneidplatte 4 des Fräskopfes 5 des Kappenfräsers 3 gerichtet ist.

Während des Fräsvorgangs des vom Elektromotor 6 über einen Getriebeantrieb 7, der eine Vielzahl miteinander in Eingriff stehender Zahnräder aufweist, angetriebenen Kappenfräsers 3 ist die Verdichterturbine 8 gleichzeitig mittels des Elektromotors 6 in Betrieb gesetzt und saugt eingangsseitig auf einem großen Querschnitt Umgebungsluft an, die durch die Turbinenräder 13 der Verdichterturbine 8 verdichtet wird, so daß ausgangsseitig letzterer aus einem geringen Querschnitt ein Druckluftstrom mit hoher Geschwindigkeit an die mit der Verdichterturbine 8 kommunizierende Düseneinrichtung 9 zum Ausblasen der beim Fräsvorgang an der Schneidplatte 4 anfallenden Späne in das mit dem Auffangbehälter 10 verbundene Spanableitsystem 11 geleitet wird.

Gemäß Fig. 1 erfolgt der Antrieb der die autonome Druckluftversorgung der Fräsvorrichtung bildenden Verdichterturbine 8 mittels des Elektromotors 6 während des Fräsvorgangs derart, daß die Rotationswelle 12 der Turbinenräder 13 der Verdichterturbine 8 über ein mit der Antriebswelle 15 der Eleketromotors 6 verbundenes Getriebe 14 in Drehung versetzt wird, so daß die Verdichterturbine 8 die benötigte Druckluft während des Fräsvorgangs erzeugt.

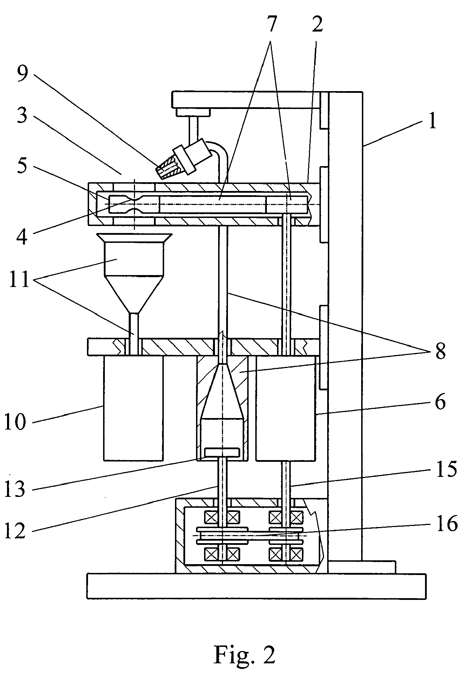

Fig. 2 zeigt eine Variante des Antriebs der Verdichterturbine 8, bei der die Rotationswelle 12 der Turbinenräder 13 über einen Zahnriemen 16 mit der Antriebswelle 15 des Elektromotors 6 des Kappenfräsers 6 verbunden ist.

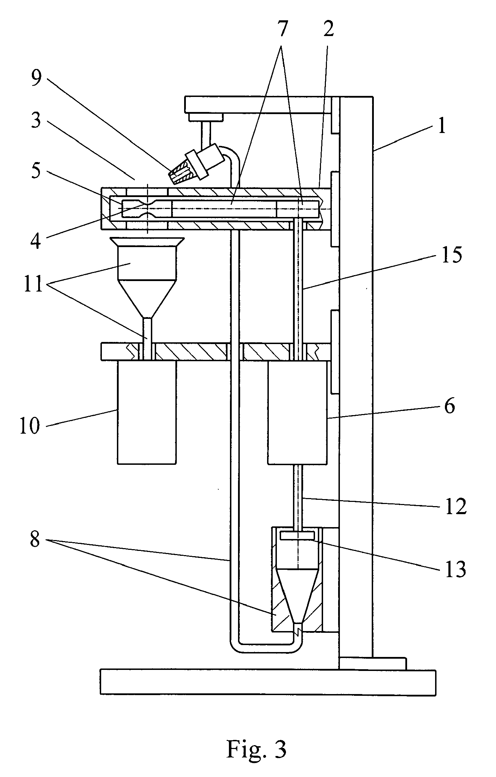

Alternativ ist, wie Fig. 3 zeigt, der Antrieb des Verdichterturbine 8 auch derart gestaltbar, daß eine Verlängerung der Antriebswelle 15 des Elektromotors 6 des Kappenfräsers 3 die Rotationswelle 12 der Verdichterturbine 8 bildet, so daß die Verdichterturbine 8 während des Fräsvorgangs unmittelbar vom Elektromotor 6 des Kappenfräsers 3 zur autonomen Druckluftversorgung der Fräsvorrichtung angetrieben ist.

### Liste der Bezugszeichen:

- 1: Ständer
- 2: Grundkörper des Kappenfräsers
- 3: Kappenfräser
- 4: Schneidplatte
- 5: Fräskopf
- 6: Elektromotor
- 7: Getriebeantrieb
- 8: Verdichterturbine
- 9: Düseneinrichtung
- 10: Auffangbehälter
- 11: Spanableitsystem
- 12: Rotationswelle der Turbinenräder
- 13: Turbinenräder
- 14: Getriebe
- 15 5: Antriebswelle des Elektromotors
- 16: Zahnriemen

## Patentansprüche

1. Fräsvorrichtung, insbesondere zum Fräsen von Elektrodenkappen und Punkschweißelektroden aus Kupferwerkstoffen, mit einem Ständer (1), an dem der Grundkörper (2) eines Kappenfräsers (3) verstellbar befestigt ist, der einen mit mindestens einer Schneidplatte (4) versehenen rotierbaren Fräskopf (5) aufweist, der von einem Elektromotor (6) über einen Getriebeantrieb (7) in Drehung versetzbar ist, und mit einer Druckluftversorgung (8) mit mindestens einer verstellbaren Düseneinrichtung (9) zum Ausblasen der beim Fräsvorgang an der Schneidplatte (4) anfallenden Späne in ein mit einem Auffangbehälter (10) verbundenes Spanableitsystem (11),
**dadurch gekennzeichnet, daß**
die Druckluftversorgung von einer Verdichterturbine (8) gebildet ist, die während des Fräsvorgangs mittels des Elektromotors (6) des Kappenfräser (3) in Betrieb gesetzt ist und die benötigte Druckluft an die mit ihr kommunizierende Düseneinrichtung (9) zum Ausblasen der beim Fräsvorgang an der Schneidplatte (4) anfallenden Späne in das mit dem Auffangbehälter (10) verbundene Spanableitsystem (11) autonom fördert.

2. Fräsvorrichtung nach Anspruch 1, **dadurch gekennzeichnet, daß** die Rotationswelle (12) der Turbinenräder (13) der Verdichterturbine (8) über ein Getriebe (14) mit der Antriebswelle (15) des Elektromotors (6) verbunden ist.

3. Fräsvorrichtung nach Anspruch 1, **dadurch gekennzeichnet, daß** die Rotationswelle (12) der Turbinenräder (13) der Verdichterturbine (8) über einen Zahnriemen (16) mit der Antriebswelle (15) des Elektromotors (6) verbunden ist.

4. Fräsvorrichtung nach Anspruch 1, **dadurch gekennzeichnet, daß** eine Verlängerung der Antriebswelle (15) des Elektromotors (6) die Rotationswelle (12) der Turbinenräder (13) der Verdichterturbine (8) bildet.
